# EUROPÄISCHE PATENTSCHRIFT

(11) **EP 1 574 356 B1**
(45) Veröffentlichungstag und Bekanntmachung des Hinweises auf die Patenterteilung: **02.07.2008**
(21) Anmeldenummer: 04405141.5
(22) Anmeldetag: 11.03.2004
(51) Int. Cl.: B42C 19/08, B65H 5/00, B65H 31/28, B65G 19/26, B65G 43/06

(54) **Förderstrecke für Buchblocks in einer Einrichtung zur Herstellung gebundener Druckerzeugnisse**
Conveyor for book blocks in an apparatus for manufacturing bound printed products
Convoyeur de blocs de livres dans un dispositif de fabrication de produits imprimés reliés

(43) Veröffentlichungstag der Anmeldung: 14.09.2005
(73) Patentinhaber: Müller Martini Holding AG, 6052 Hergiswil (CH)
(72) Erfinder: Stolz, Thomas, 8523 Hagenbuch ZH (CH)

(56) Entgegenhaltungen:
- EP-A- 1 232 879
- DE-A- 3 116 679
- DE-A- 4 012 084
- DE-A- 19 616 047
- GB-A- 682 669
- GB-A- 2 147 569
- US-A- 2 895 148
- US-A- 3 418 947
- US-A- 3 503 489

## Beschreibung

Die Erfindung betrifft eine Vorrichtung zum Zusammentragen und Fördern von aus übereinander angeordneten Druckprodukten gebildeten losen Buchblocks auf einer Förderstrecke einer Einrichtung zur Herstellung von Büchern oder Zeitschriften, entlang welcher Förderstrecke ein umlaufendes, mit an einem Zugmittel befestigten und quer zur Förderrichtung in einen Förderkanal ragenden, fingerartigen Mitnehmern ausgebildetes, die Buchblocks transportierendes Förderorgan und dieses mit Druckprodukten beschickende Anleger angeordnet sind

Vorrichtungen der eingangs beschriebenen Art sind u.a. in Anlagen zur Herstellung klebegebundener Buchblocks oder Büchern und in Ableimmaschinen, vornehmlich für fadengeheftete Buchblocks bekannt.

In Zusammentragmaschinen wird zur Bildung von losen Buchblocks durch entlang einer Förderstrecke angeordnete Anleger ein Förderkanal mit Druckprodukten beschickt und die aus übereinander liegenden Druckprodukten gebildeten Buchblocks auf dem Buchblockrücken stehend einem Klebebinder zugeführt. Auf dem Ueberführungsweg werden die losen Buchblocks senkrecht aufgestellt, so dass sie von unten in die umlaufenden Transportzangen eines Klebebinders einführbar sind.
Zu diesem Zweck weist die Zusammentragmaschine an einem umlaufenden Zugmittel befestigte, in den Förderkanal ragende Mitnehmer auf, die beim Bilden der losen Buchblocks diese an der sog. Kopf- oder Fussskante des Buchblocks stossend anliegend transportieren. Dabei wird der Buchblock durch ein Aufstellelement in einer quer zur Förderrichtung senkrechten Ebene um etwa 90° gedreht, so dass er auf dem Rücken stehend den Klebebinder erreicht.
Auf diesem Förderabschnitt passiert der Buchblock das sich in Förderrichtung etwa nach einer Schraubenlinie windende Aufstellelement, wo der Buchblock auf den Rücken gestellt und der Mitnehmer durch einen Führungsschlitz sukzessive in eine horizontale Lage umgelegt wird.

Sowohl beim Zusammentragen der Druckprodukte wie auch beim Ueberführen von der Zusammentragmaschine in den Klebebinder kommt es vor, dass Druckprodukte auf der Förderstrecke anstossen und bezüglich Förderrichtung verschoben werden, sodass sich anschliessend ein Stau bildet, der zum Bruch des aus einem Kunststoff geformten Mitnehmers führen kann. Es kommt dazu, dass neben dem Bruch des Mitnehmerfingers auch das Gelenk, der Halter und/oder Kettenglieder des Zugmittels in Mitleidenschaft gezogen werden und als Folge davon ausgewechselt werden müssen. Dies führt zu einem grösseren Reparaturaufwand, zumal es entlang der Förderstrecke nur wenige Stellen gibt, an denen ausreichend Platz vorhanden ist, um den Schaden beheben zu können.
Trifft der Schaden die Kette, muss diese zum Austausch von Gliedern entspannt werden. Die Zugänglichkeit zur Kette mit Werkzeugen ist in den meisten Fällen beschränkt und es ist nicht einfach, in engen Platzverhältnissen mit Schrauben, Muttern, Bolzen und Sicherungsringen richtig umzugehen.

Die GB - A - 682 669 betrifft eine Fördereinrichtung zur Beschickung einer Buchbindemaschine mit Buchblocks, die auf einem ersten Förderabschnitt stehend und quer zur Förderrichtung und auf einem rechtwinklig anschliessenden weiteren Förderabschnitt längs zur Förderrichtung schrittweise transportiert werden.

Die DE - A - 31 16 679 beschreibt einen bekannten Transportfinger eines sich längs einer Förderbahn erstreckenden Transportsystems zum Ueberführen von Lagen oder Stapeln der papierverarbeitenden Industrie, welche dem Transportsystem in Querrichtung zugeführt werden.

Durch die EP - A - 1 232 879 ist vor dem vorliegend beschriebenen Gegenstand eine Einfuhrvorrichtung zum Transportieren von Buchblöcken in eine Folgemaschine mittels Mitnehmer bekannt geworden.

Die ältere US - A - 3 503 489 offenbart einen bekannten Förderer für stehend transportierte Buchblocks mittels einer durchlaufenden Doppelkette, an der sich quer zur Förderrichtung erstreckende, stangenförmige Mitnehmer angelenkt sind.

Ein dem vorliegenden Gegenstand nächstliegende vorbekannte Zusammentragmaschine nach der DE - A - 196 16 047 dient dem Zusammentragen und Fördern von aus übereinander angeordneten Druckprodukten gebildeten losen Buchblocks auf einer Förderstrecke einer Einrichtung zur Herstellung von Büchern oder Zeitschritten.

Aufgabe der Erfindung ist es deshalb, die Mitnehmer und deren Befestigungsteile so auszubilden, dass eine Demontage resp. ein Austausch von Teilen unter Meidung von Verformungen an dem Zugmittel einfach und ohne grossen Zeitaufwand durchführbar ist.

Erfindungsgemäss ist diese Aufgabe so gelöst, dass jeder fingerartig ausgebildete Mitnehmer einen im Abstand zur Befestigungsstelle an dem Zugmittel (4) angeordneten Sollbruchbereich aufweist, d.h., dass bei einem Bruch des Mitnehmers keine weiteren Teile des Förderorgans beschädigt werden.

Anschliessend wird die Erfindung unter Bezugnahme auf die Zeichnung, auf die bezüglich aller in der Beschreibung nicht näher erwähnten Einzelheiten ausdrücklich verwiesen wird, anhand eines Ausführungsbeispiels erläutert. In der Zeichnung zeigen:
- Fig. 1: eine auszugsweise räumliche Darstellung eines Förderkanals einer Zusammentragmaschine,
- Fig. 2: eine auszugsweise räumliche Darstellung des Förderkanals in Förderrichtung nach einem Aufstellelement,
- Fig. 3: eine auszugsweise Draufsicht auf ein Förderorgan, bestehend aus Zugmittel und daran befestigtem Mitnehmer,
- Fig. 4: einen Querschnitt nach Linie IV - IV in Fig. 3 durch einen Sollbruchbereich des Mitnehmers,
- Fig. 5: einen Querschnitt nach Linie V - V in Fig. 3 durch den Mitnehmer und
- Fig. 6: einen auszugsweisen Längsschnitt in Förderrichtung durch das Förderorgan.

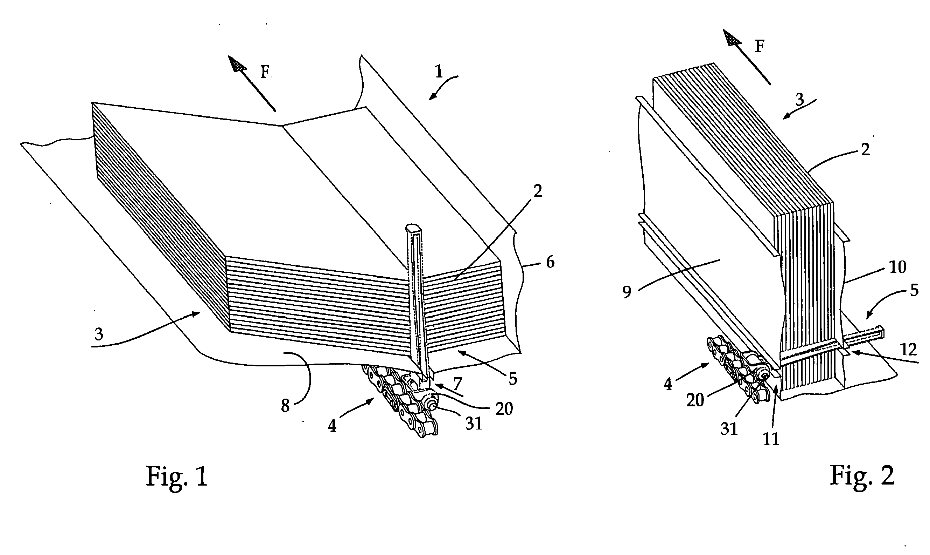

Fig. 1 zeigt einen Abschnitt eines Förderkanals 1 einer Zusammentragmaschine, in dem sich ein aus zusammengetragenen Druckbogen 2 gebildeter loser Buchblock 3 befindet, der an dem in Förderrichtung F rückwärtigen Ende von einem an einer als Zugmittel 4 eingesetzten angetriebenen Förderkette befestigten Mitnehmer 5 transportiert wird. Der Förderkanal 1 besitzt eine Führungswand 6 an der die von der gegenüberliegenden Seite mittels Druckbogenanlegern einzeln zugeführten Druckbogen 2 mit dem Falz voran auftreffen. Die an der umlaufenden Förderkette 4 in regelmässigen Abständen befestigten Mitnehmer 5 verlaufen in einem Schlitz 7 des Kanalbodens 8 und wirken auf den sich bildenden Buchblock 3 fördernd ein.
Am Ende der Zusammentragstrecke windet sich der Förderkanal 1 in der Förderrichtung um etwa 90°, sodass der Buchblock 3 auf den gefalzten Rücken der Druckbogen 2 steht und durch den ebenfalls um 90° gedrehten Mitnehmer 5 weitertransportiert wird. Fig. 2 veranschaulicht den Buchblock 3 stehend auf seinem Rücken, der durch die Kanten der Druckbogen 2 gebildet wird. Der Mitnehmer 5 durchsetzt zwei seitliche, den Förderkanal 1 bildende Führungswände 9, 10, in denen schlitzartige Ausnehmungen 11, 12 vorgesehen sind.

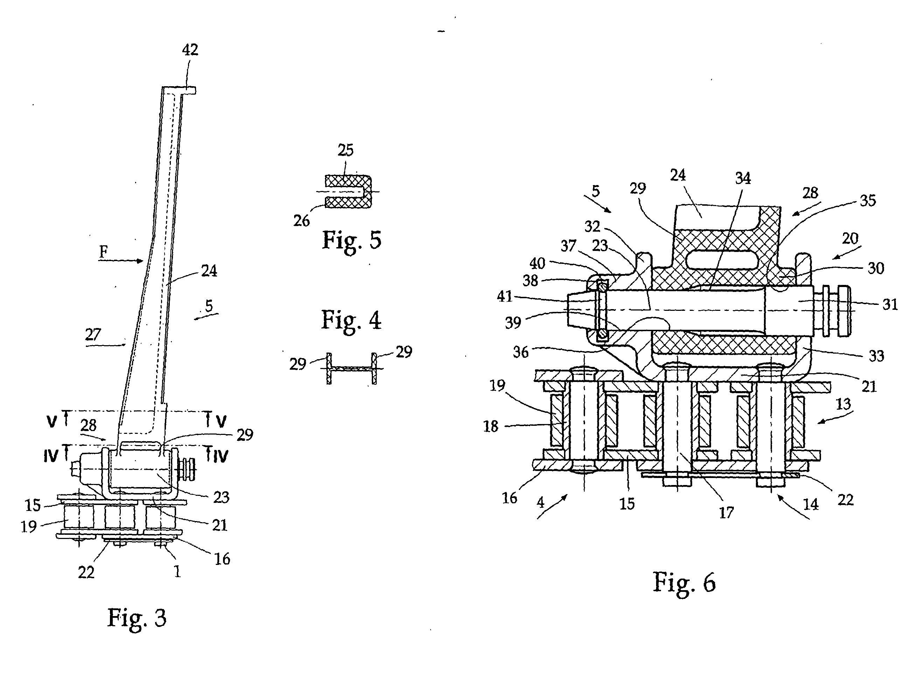

Fig. 3 zeigt den Mitnehmer 5 in der Lage nach Fig. 2, wobei als Zugmittel 4 eine mehrgliedrige, einfache Rollenkette vorgesehen ist. Letztere besteht aus Innen- 13 und Aussengliedern 14, deren Laschen 15, 16 durch Bolzen 17 bzw. Hülsen 18 fest verbunden sind. Auf den Hülsen 18 sind frei drehbare, hohle Rollen 19 gelagert.
An der Befestigungsstelle des Mitnehmers 5, wozu ein Aussenglied 14 benutzt wird, wird eine Aussenlasche 16 durch einen Lagerbock 20 ersetzt, der zur Aufnahme des Mitnehmers 5 dient. Zu diesem Zweck ist am Lagerbock 20 eine Befestigungsplatte 21 vorgesehen, in der zwei Bolzen 17 des Aussengliedes 14 einenends mit der Halteplatte 21 des Lagerbocks 20 vernietet und anderenends durch einen Federbügel 22 lösbar gesichert sind. Der als Befestigungsstelle für den Mitnehmer 5 ausgebildete Lagerbock 20 ist mit einer in Förderrichtung F sich erstreckenden Schwenkachse 23 versehen, an der der Mitnehmer 5 in einer quer zur Förderrichtung F stehenden Ebene schwenkbar, beispielsweise durch eine Steuerkurve betätigbar, gelagert ist. Im vorliegenden Fall bilden der Schlitz 7 im Kanalboden 8 resp. die Ausnehmungen 11, 12 der Führungswände 9, 10 die Steuerkurve, durch die der Mitnehmer 5 geführt ist. Der Mitnehmer 5 ist durch einen förderwirksamen, die Buchblocks 3 an der rückwärtigen Seite stossenden Finger 24 ausgebildet und letzterer weist einen an den Sollbruchbereich angrenzenden U-förmigen Querschnitt auf, dessen Schenkel 25, 26 sich entgegen der Förderrichtung F erstrecken. Die Schenkel 25, 26 sind in Längserstreckungsrichtung des Mitnehmerfingers 24 sich verjüngend ausgebildet, zumindest auf einem Teilabschnitt 27 nach dem Sollbruchbereich 28. Im Sollbruchbereich 28 ist der Mitnehmerfinger 24 durch quer zur Förderrichtung F verlaufende, beabstandete Verbindungsstege 29 mit einer an der Schwenkachse 23 angeordneten Nabe 30 des Mitnehmers 5 verbunden (siehe Fig. 4).
Der Mitnehmer 5 ist durch die Nabe 30 mit dem am Zugmittel resp. der Rollenkette 4 befestigten Lagerbock 20 verbunden. Die Verbindung des Mitnehmers 5 mit dem Lagerbock 20 erfolgt durch einen Steckbolzen 31, der zwei in Förderrichtung F beabstandete Lagerstege 32, 33 des Lagerbocks 20 und die dazwischen angeordnete Nabe 30 des Mitnehmers 5 die Schwenkachse 23 bildend durchsetzt (siehe Fig. 6 insbesondere).
Der Steckbolzen 31 ist einerseits so ausgebildet, dass er ausschliesslich von einem Lagerbockende aus und andererseits nur an einem Ende der Nabe 30 durch beide Teile durchgesteckt werden kann. Damit kann erreicht werden, dass der Mitnehmer 5 bei einem Wechsel in die richtige Funktionslage eingesetzt und der Steckbolzen 31 an dem dafür vorgesehenen Lagersteg 32 gesichert wird. Hierzu weist die Nabe 30 des Mitnehmers 5 eine Bohrung 34 auf, die am Einsteckende 35 für den Steckbolzen 31 den grösseren Durchmesser als am Austrittsende 36 aufweist. Dementsprechend ist die Einstecköffnung des Lagerstegs 33 grösser ausgebildet als die Austrittsöffnung des Lagerbocks 20 an dessen gegenüberliegenden Ende.

Zur Sicherung des Steckbolzens 31 ist an dem austrittsseitigen Lagersteg 32 ein Auge 37 befestigt, das Teil einer Arretiervorrichtung 41 zur Verhinderung einer Verschiebung des Steckbolzens 31 aus der Betriebslage in Richtung der Schwerikachse 23 bildet. Weiterhin bilden eine kreisförmige Nut 38 in einer Bohrung 39 des Auges 37 sowie ein in die Nut 38 eingelegter Sprengring 40, der in eine Ringnut 41 an dem Steckbolzen 31 einrastet, die weiteren wesentlichen Teile der Arretiervorrichtung 41.
Damit der Steckbolzen 31 leicht in die unterschiedlichen Bohrungsdurchmesser eingeführt werden kann, ist er am vorderen Ende kegelstumpfförmig ausgebildet.
Der Mitnehmer 5 ist vorzugsweise ein aus Kunststoff gebildeter Spritzling, der am freien Ende zur Verstärkung eine Nase 42 aufweist.

## Patentansprüche

1. Vorrichtung zum Zusammentragen und Fördern von aus übereinander angeordneten Druckprodukten (2) gebildeten losen Buchblocks (3) auf einer Förderstrecke einer Einrichtung zur Herstellung von Büchern oder Zeitschriften, entlang welcher Förderstrecke ein umlaufendes, mit an einem Zugmittel (4) befestigten und quer zur Förderrichtung (F) in einen Förderkanal (1) ragenden, fingerartigen Mitnehmern (5) ausgebildetes, die Buchblocks (3) transportierendes Förderorgan und dieses mit Druckprodukten (2) beschickende Anleger angeordnet sind **dadurch gekennzeichnet, dass** jeder fingerartig ausgebildete Mitnehmer (5) einen im Abstand zur Befestigungsstelle an dem Zugmittel (4) angeordneten Sollbruchbereich (28) aufweist.

2. Vorrichtung nach Anspruch 1, **dadurch gekennzeichnet, dass** die Befestigungsstelle durch eine Schwenkachse (23) **eines** Mitnehmers (5) ausgebildet ist.

3. Einrichtung nach Anspruch 1 oder 2, **dadurch gekennzeichnet, dass** die Mitnehmerfinger (24) einen an den Sollbruchbereich anschliessenden U-förmigen Querschnitt aufweisen.

4. Einrichtung nach Anspruch 3, **dadurch gekennzeichnet, dass** die Schenkel (25, 26) des U-förmigen Querschnitts sich entgegen der Förderrichtung (F) erstrecken.

5. Einrichtung nach einem der Ansprüche 1 bis 4, **dadurch gekennzeichnet, dass** die Schenkel (25, 26) der Mitnehmerfinger (24) in Längserstreckungsrichtung sich verjüngend ausgebildet sind.

6. Einrichtung nach einem der Ansprüche 3 bis 5, **dadurch gekennzeichnet, dass** die Mitnehmerfinger (24) im Sollbruchbereich durch quer zur Förderrichtung (F) verlaufende Verbindungsstege (29) mit einer an der Schwenkachse (23) angeordneten Nabe (30) des Mitnehmers (5) verbunden sind.

7. Einrichtung nach Anspruch 6, **dadurch gekennzeichnet, dass** die Mitnehmer (5) durch die Nabe (30) an einem mit dem Zugmittel (4) verbundenen Lagerbock (20) angeordnet sind.

8. Einrichtung nach Anspruch 7, mit einem als Rollenkette ausgebildeten Zugmittel (4), **dadurch gekennzeichnet, dass** der Lagerbock (20) durch eine als Aussenlasche (16) eines Kettengliedes (14) ausgebildete Befestigungsplatte (21) an der Rollenkette befestigt ist.

9. Einrichtung nach Anspruch 8, **dadurch gekennzeichnet, dass** die Befestigungsplatte (21) ein Teil eines Kettenschlosses bildet.

10. Einrichtung nach einem der Ansprüche 7 bis 9, **dadurch gekennzeichnet, dass** der Lagerbock (20) zwei beabstandete, quer zur Förderrichtung (F) gerichtete Lagerstege (32, 33) aufweist, zwischen denen die Nabe (30) eines Mitnehmers (5) an einem die Lagerstege (32, 33) durchsetzenden Steckbolzen (31) gelagert ist.

11. Einrichtung nach Anspruch 10, **dadurch gekennzeichnet, dass** das vordere Ende des Steckbolzens einen geringeren Durchmesser aufweist als das hintere Steckbolzenende.

12. Einrichtung nach Anspruch 10, **dadurch gekennzeichnet, dass** den Steckbolzenenden unterschiedliche Bohrungen (35, 36) in der Nabe (30) der Mitnehmer (5) und den Lagerstegen (32, 33) des Lagerbocks (20) zugeordnet sind.

13. Einrichtung nach einem der Ansprüche 10 bis 12, **dadurch gekennzeichnet, dass** zur achsialen Arretierung des Steckbolzens (31) zwischen diesem und dem Lagerbock (20) eine Arretiervorrichtung vorgesehen ist.

## Claims

1. Device for collecting and conveying loose book blocks (3), comprising piled printed materials (2), on a conveying track of equipment for producing books or magazines, along which conveying track a circulating conveying body with fingerlike entrainment means (5), attached to a traction means (4) and projecting, transversely in relation to the conveying direction (F), into a conveying channel (1), and with a feeder that loads the said conveying body, **characterized in that** each fingerlike entrainment element (5) has a preset breaking area disposed, at a separation from the attachment point, on the traction means.

2. Device in accordance with claim 1, **characterized in that** the attachment point is formed by a pivoting pin (23) of an entrainment means (5).

3. Device in accordance with claim 1 or 2, **characterized in that** the entrainment fingers (24) have a U-shaped cross-sectional form adjoining the predetermined breaking area.

4. Device in accordance with claim 3 or 4, **characterized in that** the arm-pieces (25, 26) of the U-shaped cross-sectional form extend in a direction running against that of the conveying device (F).

5. Device in accordance with one of claims 1 to 4, **characterized in that** the arm-pieces (25, 26) of the entrainment fingers (24) taper in the direction of their longitudinal extension.

6. Device in accordance with one of claims 3 to 5, **characterized in that** the entrainment fingers (24) are connected, in the set breaking area, by connection fillets (29), with a hub (30), of the entrainment means (5), disposed on the pivoting axis (23), the said fillets (29) running transversely in relation to the conveying direction (F).

7. Device in accordance with claim 6, **characterized in that** the entrainment means (5) are disposed, by means of the hub (30), on a bearing block (20) connected to the traction means (4).

8. Device in accordance with claim 7, with a traction means (4) developed as a roller chain, **characterized in that** the bearing block (20) is fastened onto the roller chain by means of an attachment plate (21) in the form of an outer cover plate (16) of a chain link (14).

9. Device in accordance with claim 8, **characterized in that** the attachment plate (21) forms a part of the chain join.

10. Device in accordance with one of claims 7 to 9, **characterized in that** the bearing block (20) has two separated bearing arms (32, 33) between which the hub (30) of an entrainment means (5) is supported on a linchpin (31) that passes through the bearing arms (32, 33).

11. Device in accordance with claim 10, **characterized in that** the front end of the linchpin has a narrower diameter than the rear end of the said linchpin.

12. Device in accordance with claim 10, **characterized in that** the ends of the linchpin have different drill holes (25, 36) in the hub (30) of the entrainment means (5) and the bearing arms (32, 33) of the bearing block (20).associated with them.

13. Device in accordance with one of claims 10 to 12, **characterized in that**, between the linchpin (31) and the bearing block (20), there is a stop device to axially stop the said linchpin (31).

## Revendications

1. Dispositif pour regrouper et transporter des corps d'ouvrage non reliés (3), formés de produits imprimés disposés en superposition, sur un parcours de transport d'un appareil de fabrication de livres ou de magazines, sachant que sont disposés le long de ce parcours de transport un organe de transport circulant - qui transporte les corps d'ouvrages (3) et est doté d'entraîneurs (5) du genre doigts fixés sur un moyen de traction (4) et dépassant dans un canal de transport (1) transversalement à la direction de transport (F) -, et des preneurs chargeant cet organe de transport en produits imprimés (2), **caractérisé en ce que** chaque entraîneur (5) réalisé du genre doigt présente une zone de rupture privilégiée (28) disposée à distance du point de fixation sur le moyen de traction (4).

2. Dispositif selon la revendication 1, **caractérisé en ce que** le point de fixation est formé par un axe de pivotement (23) d'un entraîneur (5).

3. Dispositif selon la revendication 1 ou 2, **caractérisé en ce que** les doigts entraîneurs (24) présentent une section en U se raccordant à la zone de rupture privilégiée.

4. Dispositif selon la revendication 3, **caractérisé en ce que** les branches (25, 26) de la section en U s'étendent à l'encontre de la direction de transport (F).

5. Dispositif selon l'une des revendications 1 à 4, **caractérisé en ce que** les branches (25, 26) des doigts entraîneurs (24) sont réalisées en se rétrécissant dans la direction d'étendue longitudinale.

6. Dispositif selon l'une des revendications 1 à 5, **caractérisé en ce que** les doigts entraîneurs (24) sont, dans la zone de rupture privilégiée, reliés par des nervures de liaison (29) s'étendant transversalement à la direction de transport (F) à un moyeu (30) de l'entraîneur (5) qui est disposé sur l'axe de pivotement (23).

7. Dispositif selon la revendication 6, **caractérisé en ce que** les entraîneurs (5) sont disposés par le moyeu (30) sur un bloc de palier (20) relié au moyen de traction (4).

8. Dispositif selon la revendication 7, avec un moyen de traction (4) réalisé sous forme de chaîne à rouleaux, **caractérisé en ce que** le bloc de palier (20) est fixé sur la chaîne à rouleaux par une plaque de fixation (21) réalisée sous forme d'attache extérieure (16) d'un maillon de chaîne (14).

9. Dispositif selon la revendication 8, **caractérisé en ce que** la plaque de fixation (21) forme une partie d'un joint de chaîne.

10. Dispositif selon l'une des revendications 7 à 9, **caractérisé en ce que** le bloc de palier (20) présente deux nervures de palier distantes (32, 33), orientées transversalement à la direction de transport (F), entre lesquelles le moyeu (30) d'un entraîneur (5) est monté sur un axe débrochable (31) traversant les nervures de palier (32, 33).

11. Dispositif selon la revendication 10, **caractérisé en ce que** l'extrémité avant de l'axe débrochable présente un plus petit diamètre que l'extrémité arrière de l'axe débrochable.

12. Dispositif selon la revendication 10, **caractérisé en ce que** des perçages différents (35, 36) dans le moyeu (30) de l'entraîneur (5) et dans les nervures de palier (32, 33) du bloc de palier (20) sont associés aux extrémités de l'axe débrochable.

13. Dispositif selon l'une des revendications 10 à 12, **caractérisé en ce qu'**un dispositif de blocage pour le blocage axial de l'axe débrochable (31) est prévu entre l'axe débrochable (31) et le bloc de palier (20).
